# EUROPEAN PATENT APPLICATION

(11) **EP 4 645 533 A1**
(43) Date of publication of application: **05.11.2025**
(21) Application number: 23910424.3
(22) Date of filing: 22.12.2023
(51) Int. Cl.: H01M 50/102, H01M 50/209

(54) **ELECTROCHEMICAL APPARATUS AND ELECTRICAL DEVICE**

(30) Priority: 30.12.2022 CN 202211736185
(71) Applicant: Dongguan NVT Technology Limited, Dongguan City, Guangdong Province 523443 (CN)
(72) Inventor: HE, Yongwei, 523443, Dongguan City, Guangdong Province (CN); YANG, Shujun, 523443, Dongguan City, Guangdong Province (CN); FENG, Guanghui, 523443, Dongguan City, Guangdong Province (CN); HU, Fengyan, 523443, Dongguan City, Guangdong Province (CN)
(74) Representative: Icosa
(86) International application number: PCT/CN2023/141195
(87) International publication number: WO 2024/140498

(57) **Abstract**

This application discloses an electrochemical apparatus and an electrical device. The electrochemical apparatus includes an electrode assembly, a battery cell shell, and an electrode terminal. The battery cell shell includes a shell body for accommodating the electrode assembly and an encapsulation portion extending outward from the shell body in a first direction, the encapsulation portion includes a first encapsulation area and a second encapsulation area, and in the first direction, an end portion of the first encapsulation area facing away from the shell body has a first distance from the electrode assembly, and an end portion of the second encapsulation area facing away from the shell body has a second distance from the electrode assembly, the first distance being greater than the second distance. The electrode terminal includes a first portion, a second portion, and a third portion connected in sequence, the first portion is electrically connected to the electrode assembly, the second portion is clamped to the first encapsulation area, and the third portion is exposed out of the battery cell shell. Since the first distance is greater than the second distance, the size of a head of a battery cell is reduced, and a side of the second encapsulation area facing away from the shell body can be used for avoiding other components, which is conducive to improving the energy density of the electrochemical apparatus.

## Description

### TECHNICAL FIELD

This application relates to the technical field of energy storage, and in particular, to an electrochemical apparatus and an electrical device.

### BACKGROUND

Influenced by electronic products, batteries used for charging and discharging in electronic products are gradually developing in the direction of thinning and compact structure, so as to be suitable for smaller and thinner electronic products. At present, because the head of a battery usually occupies a large space, there is a problem that it is difficult to improve the energy density of the battery.

### SUMMARY

In view of this, this application provides an electrochemical apparatus which is conducive to reducing the occupied space.

Some embodiments of this application provide an electrochemical apparatus. The electrochemical apparatus includes an electrode assembly, a battery cell shell, and an electrode terminal. The battery cell shell includes a shell body for accommodating the electrode assembly and an encapsulation portion extending outward from the shell body in a first direction, the encapsulation portion includes a first encapsulation area and a second encapsulation area, and in the first direction, an end portion of the first encapsulation area facing away from the shell body has a first distance from the electrode assembly, and an end portion of the second encapsulation area facing away from the shell body has a second distance from the electrode assembly, the first distance being greater than the second distance. The electrode terminal includes a first portion, a second portion, and a third portion connected in sequence, the first portion is electrically connected to the electrode assembly, the second portion is clamped to the first encapsulation area, and the third portion is exposed out of the battery cell shell.

Since the first distance is greater than the second distance, the size of a head of a battery cell is reduced, and a side of the second encapsulation area facing away from the shell body can be used for avoiding other components, which is conducive to improving the energy density of the electrochemical apparatus.

In some embodiments, the electrochemical apparatus further includes an adapter structure, the adapter structure connects the first portion with the electrode assembly, a connecting portion is provided between the adapter structure and the first portion, and the connecting portion is positioned between the first encapsulation areas and the electrode assembly.

The adapter structure is provided to facilitate the connection between the electrode terminal and the electrode assembly. Since the adapter structure is provided between the first encapsulation area and the electrode assembly, the shell body reserves a space for accommodating the connecting portion, which facilitates the placement of the adapter structure.

In some embodiments, in the first direction, a width of the first encapsulation area is 2.5 mm-3.5 mm, and a width of the second encapsulation area is 2.5 mm-3.5 mm.

The width of the first encapsulation area is within the same range as the width of the second encapsulation area, so that the width of the second encapsulation area in the first direction is reduced, which is further conducive to reducing the overall size of the battery cell shell and reducing the occupied space of the electrochemical apparatus.

In some embodiments, the electrochemical apparatus further includes an adapter structure, the adapter structure connects the first portion with the electrode assembly, and a connecting portion is provided between the adapter structure and the first portion. The first encapsulation area includes a sealing area and a fixing area, the sealing area is used for clamping the second portion, the fixing area is positioned between the sealing area and the electrode assembly, and the fixing area is used for clamping the connecting portion.

Since the adapter structure is clamped to the fixing area, the limiting effect of the internal space of the shell body on the adapter structure in the third direction is reduced. The fixing area clamping the connecting portion can be understood as the encapsulation portions are provided on two opposite sides of the connecting portion.

In some embodiments, in the first direction, a width of the first encapsulation area is 4 mm-6 mm, and a width of the second encapsulation area is 2.5 mm-3.5 mm.

Since the width of the first encapsulation area in the first direction is 4 mm-6 mm, and the width of the second encapsulation area in the first direction is 2.5 mm-3.5 mm, the width of the second encapsulation area in the first direction is reduced, which is further conducive to reducing the overall size of the battery cell shell and reducing the occupied space of the electrochemical apparatus.

In some embodiments, in a second direction, the first encapsulation area is positioned on one side of the second encapsulation area, and the second direction is perpendicular to the first direction.

Since the first encapsulation area is positioned on one side of the second encapsulation area, portions of the battery cell shell for avoiding other components are disposed on one side of the electrode terminal in the second direction, thereby allowing the portions of the battery cell shell for avoiding other components to be centralized on one side, and facilitating the arrangement of other components.

In some embodiments, the encapsulation portion further comprises another first encapsulation areas, the second encapsulation area is positioned between the two first encapsulation area and the other first encapsulation area in the second direction, and the second direction is perpendicular to the first direction.

Since the second encapsulation area is positioned between the two first encapsulation areas, portions of the battery cell shell for avoiding other components are positioned between the electrode terminals on the two sides, thereby allowing the portions of the battery cell shell for avoiding other components to be centralized between the two sides in the second direction, and facilitating the arrangement of other components.

In some embodiments, the first encapsulation area and the second encapsulation area are arranged in the second direction, and the second direction is perpendicular to the first direction. The shell body has a first length in the first direction, and a second length in the second direction. The first length is less than the second length.

Since the second length is greater than the first length, the length of the encapsulation portion in the second direction can be increased, which in turn facilitates the increase of the length of the second encapsulation portion in the second direction, and increases the space of the battery cell shell for avoiding other components, further reduces the overall size of the battery cell shell, and reduces the occupied space of the electrochemical apparatus.

In some embodiments, in the first direction, the encapsulation portion is provided with an avoidance notch, and the avoidance notch is positioned on a side of the second encapsulation area facing away from the shell body.

Since the avoidance notch is used for avoiding other components, other components can pass through the avoidance notch, thereby reducing the occupied space of the electrochemical apparatus.

In some embodiments, the electrochemical apparatus further includes a circuit board assembly, the circuit board assembly includes a substrate, and a conductive member and electronic components, disposed on the substrate, the conductive member is electrically connected to the third portion, and in the first direction, at least a few of the electronic components are positioned on a side of the second encapsulation area facing away from the shell body.

The side of the second encapsulation area facing away from the shell body can be used for avoiding the higher electronic components in the third direction, to reduce the influence of the height of the electronic components on the overall thickness of the electrochemical apparatus in the third direction, which is conducive to reducing the occupied space of the electrochemical apparatus.

In some embodiments, an end portion of the shell body in the first direction is provided with a first wall and a second wall that are connected to each other, the first wall is connected to the first encapsulation area, the second wall is connected to the second encapsulation area, and in the first direction, a distance between the first wall and the electrode assembly is a third distance, a distance between the second wall and the electrode assembly is a fourth distance, and the third distance is greater than or equal to the fourth distance.

Since the third distance is greater than or equal to the fourth distance, the distance between the second wall and the electrode assembly can be reduced, and part of the first side portion is recessed, which is conducive to reducing the overall size of the battery cell shell and reducing the occupied space of the electrochemical apparatus.

In some embodiments, the third distance is greater than the fourth distance, the first encapsulation area and the second encapsulation area are arranged in the second direction, the substrate includes a first plate body and a second plate body, the first plate body is positioned on a side of the first wall away from the electrode assembly, the second plate body is positioned on a side of the second wall away from the electrode assembly, and the first direction is perpendicular to the second direction. In the first direction, the first plate body has a first width, the second plate body has a second width, and the first width is less than the second width.

Since the third distance is greater than the fourth distance, the distance between the second wall and the electrode assembly is reduced, and part of the first side portion is recessed, thereby increasing the space, for accommodating the substrate, on the side of the second wall facing away from the shell body, and facilitating an increase in the width of the second plate body. By increasing the width of the second plate body, the arrangement and setting of the electronic components are facilitated.

In some embodiments, the first encapsulation area and the second encapsulation area are arranged in a second direction, a first accommodating space is disposed on sides of the first encapsulation area and the second encapsulation area in a third direction, the first direction, the second direction and the third direction are perpendicular to each other, and at least part of the substrate is positioned in the first accommodating space.

Since the first accommodating space accommodates the substrate, the structural compactness of the electrochemical apparatus can be improved, and the thickness of the electrochemical apparatus in the third direction is reduced, which is conducive to reducing the occupied space of the electrochemical apparatus.

In some embodiments, the conductive member is positioned in the first accommodating space, and at least part of the third portion extends into the first accommodating space and is connected to the conductive member.

Since at least part of the third portion extends into the first accommodating space and is connected to the conductive member, the structural compactness of the electrochemical apparatus is further improved.

In some embodiments, in the third direction, a second accommodating space is disposed on sides of the first encapsulation area and the second encapsulation area facing away from the first accommodating space, at least part of the conductive member is positioned in the second accommodating space, and at least part of the third portion extends into the second accommodating space and is connected to the conductive member.

In this way, the connecting structure of the electrode terminal and the circuit board assembly is also placed in the second accommodating space, which further optimizes the structural arrangement and improves the structural compactness of the electrochemical apparatus.

In some embodiments, the electrochemical apparatus further includes a first insulating member and a second insulating member, the first insulating member connects the circuit board assembly to the first encapsulation area and/or the second encapsulation area, and the second insulating member connects the third portion to the first encapsulation area.

The first insulating member and the second insulating member have insulating and bonding effects, and are capable of fixing the circuit board assembly to at least one of the first encapsulation area and the second encapsulation area, and fixing the third portion to the first encapsulation area, so as to reduce the risks of deformation of the third portion under stress, and of disconnection of the third portion from the conductive member under stress.

This application further provides an electrical device which is conducive to improving use experience.

Some embodiments of this application provide an electrical device. The electrical device includes a device body and the electrochemical apparatus according to any one of the embodiments described above, the electrochemical apparatus being mounted in the device body.

By reducing the occupied space of the above electrochemical apparatus, the energy density of the electrochemical apparatus can be improved, which is conducive to improving the use performance of the electrical device and improving user experience.

The encapsulation portion of the electrochemical apparatus in this application includes the first encapsulation area and the second encapsulation area, and in the first direction, the end portion of the first encapsulation area facing away from the shell body has the first distance from the electrode assembly, and the end portion of the second encapsulation area facing away from the shell body has the second distance from the electrode assembly, the first distance being greater than the second distance. By making the first distance be greater than the second distance, the size of the head of the battery cell is reduced, and the side of the second encapsulation area facing away from the shell body can be used for avoiding other components, which is conducive to improving the energy density of the electrochemical apparatus.

### BRIEF DESCRIPTION OF DRAWINGS

FIG. 1 is a schematic exploded view of an electrochemical apparatus according to an embodiment of this application.
FIG. 2 is a schematic structural diagram of an electrochemical apparatus according to an embodiment of this application.
FIG. 3a is a partial sectional view of a positive electrode terminal according to an embodiment of this application.
FIG. 3b is a partial sectional view of a negative electrode terminal according to an embodiment of this application.
FIG. 4 is a partial sectional view of an electrochemical apparatus according to an embodiment of this application.
FIG. 5 is a schematic structural diagram of an electrochemical apparatus according to an embodiment of this application.
FIG. 6 is a front view of an electrochemical apparatus according to an embodiment of this application.
FIG. 7 is a schematic structural diagram of an electrochemical apparatus according to an embodiment of this application.
FIG. 8 is a schematic partial view of an electrochemical apparatus according to an embodiment of this application.
FIG. 9 is a schematic partial view of an electrochemical apparatus according to an embodiment of this application.
FIG. 10 is a schematic partial view of an electrochemical apparatus according to an embodiment of this application.
FIG. 11 is a schematic partial view of an electrochemical apparatus according to an embodiment of this application.
FIG. 12 is a schematic structural diagram of an electrical device according to an embodiment of this application.

### Description of reference signs of main components

| | |
|---|---|
| Electrochemical apparatus | 100 |
| Electrode assembly | 10 |
| Negative electrode plate | 11 |
| Positive electrode plate | 12 |
| Separator | 13 |
| Battery cell shell | 20 |
| Shell body | 21 |
| First side portion | 211 |
| First wall | 2111 |
| Second wall | 2112 |
| Second side portion | 212 |
| Third side portion | 213 |
| Fourth side portion | 214 |
| Fifth side portion | 215 |
| Sixth side portion | 216 |
| Encapsulation portion | 22 |
| First encapsulation area | 221 |
| Sealing area | 2211 |
| Fixing area | 2212 |
| Second encapsulation area | 222 |
| Avoidance notch | 223 |
| Side sealing portion | 23 |
| First accommodating space | 24 |
| Second accommodating space | 25 |
| Electrode terminal | 30 |
| First portion | 31 |
| Second portion | 32 |
| Third portion | 33 |
| Insulating adhesive | 30a |
| adapter structure | 40 |
| Connection part | 41 |
| Protective layer | 50 |
| Circuit board assembly | 60 |
| Substrate | 61 |
| First plate body | 611 |
| Second plate body | 612 |
| Conductive member | 62 |
| Electronic component | 63 |
| First insulating member | 70 |
| Second insulator | 80 |
| Device body | 200 |
| Electric device | 1000 |
| First distance | D1 |
| Second distance | D2 |
| Third distance | D3 |
| Fourth distance | D4 |
| First width | W1 |
| Second width | W2 |
| First direction | X |
| Second direction | Y |
| Third direction | Z |

### DETAILED DESCRIPTION OF EMBODIMENTS

Technical solutions in embodiments of this application will be described below in conjunction with accompanying drawings in the embodiments of this application. Apparently, the described embodiments are merely some rather than all of the embodiments of this application.

It should be noted that when a component is considered to be "connected" to another component, it can be directly connected to another component or there may be an intermediate component at the same time. When a component is considered to be "disposed on" another component, it may be directly disposed on another component or there may be an intermediate component at the same time.

It is worth noting that when two assemblies or components are "electrically connected" to each other, the two components can be considered to be in direct contact, soldered, bonded, etc. to achieve electrical conduction.

The terms "top", "bottom", "upper", "lower", "left", "right", "front", "back", and similar expressions are used herein for illustrative purposes only.

The term "perpendicular" is used to describe the ideal state between two components. In the actual production or use state, the two components may have an approximately perpendicular state. For example, in conjunction with a numerical description, perpendicular may refer to an included angle between two straight lines being within the range of 90°±10°, perpendicular may also refer to a dihedral angle between two planes being within the range of 90°±10°, and perpendicular may also refer to an included angle between a straight line and a plane being within the range of 90°±10°. The two components described as "perpendicular" may not absolutely be straight lines or planes, but may also roughly be straight lines or planes. From a macroscopic point of view, components with the overall extension direction being straight lines or planes may be regarded as "straight lines" or "planes".

It should be noted that when a parameter is greater than, equal to or less than a certain endpoint value, it should be understood that the endpoint value allows a tolerance of ± 10%. For example, A being 10 greater than B should be understood as including A being 9 greater than B, and A being 11 greater than B.

Unless otherwise specified, the term "a plurality of" as used in this application refers to two or more.

Unless otherwise defined, all technical and scientific terms used herein have the same meanings as commonly understood by a person skilled in the technical field to which this application pertains. The terms used herein in the specification of this application are merely for the purpose of describing specific embodiments and are not intended to limit this application.

This application discloses an electrochemical apparatus. The electrochemical apparatus includes an electrode assembly, a battery cell shell, and an electrode terminal. The battery cell shell includes a shell body for accommodating the electrode assembly and an encapsulation portion extending outward from the shell body in a first direction, the encapsulation portion includes a first encapsulation area and a second encapsulation area, and in the first direction, an end portion of the first encapsulation area facing away from the shell body has a first distance from the electrode assembly, and an end portion of the second encapsulation area facing away from the shell body has a second distance from the electrode assembly, the first distance being greater than the second distance. The electrode terminal includes a first portion, a second portion, and a third portion connected in sequence, the first portion is electrically connected to the electrode assembly, the second portion is clamped to the first encapsulation area, and the third portion is exposed out of the battery cell shell.

Since the first distance is greater than the second distance, the size of a head of a battery cell is reduced, and a side of the second encapsulation area facing away from the shell body can be used for avoiding other components, which is conducive to improving the energy density of the electrochemical apparatus.

Some embodiments of this application will be described below in conjunction with the accompanying drawings. The following embodiments and features in the embodiments may be combined with each other without conflicts.

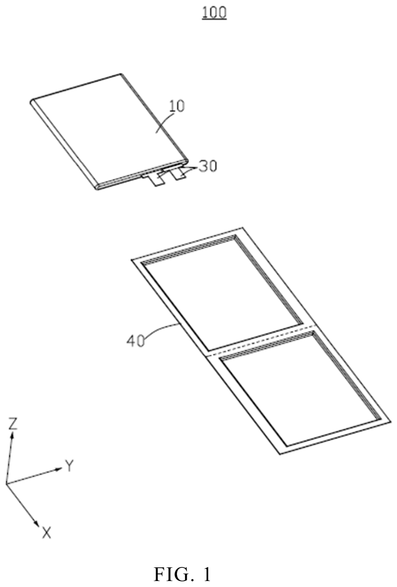

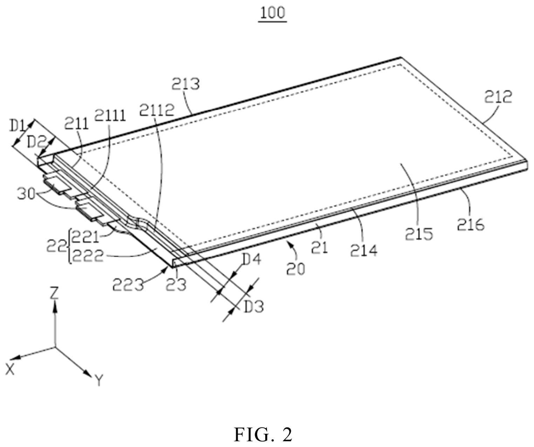

Referring to FIG. 1 and FIG. 2, the embodiments of this application provide an electrochemical apparatus 100. The electrochemical apparatus 100 includes an electrode assembly 10, an electrode terminal 30, and a battery cell shell 20. The electrode assembly 10 is disposed in the battery cell shell 20. The electrode terminal 30 is electrically connected to the electrode assembly 10, and at least part of the electrode terminal 30 extends out of the battery cell shell 20 to be electrically connected to a structure outside the battery cell shell 20.

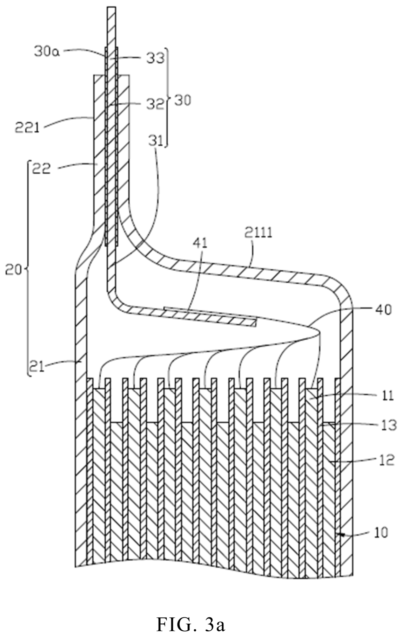

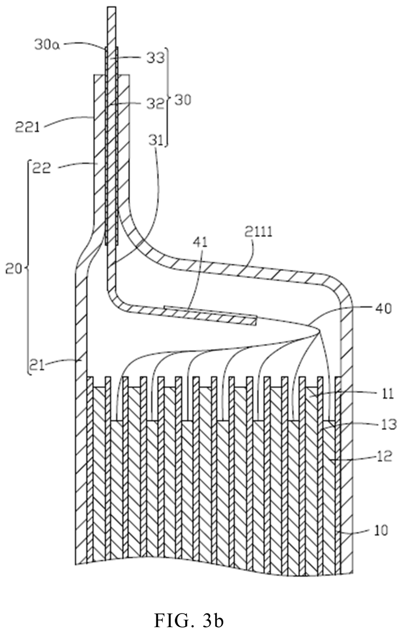

Referring to FIG. 3a and FIG. 3b, the electrode assembly 10 includes a negative electrode plate 11, a positive electrode plate 12, and a separator 13. The separator 13 is disposed between the negative electrode plate 11 and the positive electrode plate 12 for separating the negative electrode plate 11 from the positive electrode plate 12. The negative electrode plate 11, the positive electrode plate 12, and the separator 13 may be laminated, or may be wound after being laminated.

In some embodiments, the negative electrode plate 11 and the positive electrode plate 12 are formed by combining an active material layer to a metal layer, and the electrode plates of different polarities are made of different metal materials. The negative electrode plate 11 may be formed by combining a positive electrode slurry to a metal layer of at least one of, for example, aluminum, platinum, nickel, tantalum, and titanium, and the positive electrode slurry combined to the metal layer forms a positive active material layer. The positive electrode plate 12 may be formed by combining a negative electrode slurry to a metal layer of at least one of, for example, copper, platinum, nickel, tantalum, and titanium, and the negative electrode slurry combined to the metal layer forms a negative active material layer. Exemplarily, the negative electrode plate 11 includes an aluminum metal layer, and the positive electrode plate 12 includes a copper metal layer.

In some embodiments, the separator 13 may be a film capable of achieving insulation, such as a polyethylene film, a polypropylene film, a polyester film, or a polyimide film, so as to separate the negative electrode plate 11 from the positive electrode plate 12.

Referring to FIG. 3a and FIG. 3b, the electrode terminal 30 includes a first portion 31, a second portion 32, and a third portion 33. The first portion 31 is electrically connected to the electrode assembly 10, the second portion 32 connects the first portion 31 to the third portion 33, and the third portion 33 is exposed out of the battery cell shell 20, so as to lead the polarity of the electrode assembly 10 out of the battery cell shell 20. The electrode terminal 30 is divided into a positive electrode terminal 30 and a negative electrode terminal 30. A first portion 31 of the positive electrode terminal 30 is electrically connected to the negative electrode plate 11, and a first portion 31 of the negative electrode terminal 30 is electrically connected to the positive electrode plate 12.

In some embodiments, the electrode terminal 30 may be made of a conductive material resistant to electrolyte solution such as a steel alloy, an aluminum alloy, a ferrous alloy, a copper alloy, or a nickel alloy. Exemplarily, the electrode terminal 30 connected to the negative electrode plate 11 is made of an aluminum metal plate, and the electrode terminal 30 connected to the positive electrode plate 12 is made of a copper metal plate.

Referring to FIG. 3a and FIG. 3b, the negative electrode plate 11, the positive electrode plate 12, and the separator 13 of the electrode assembly 10 are all disposed inside the battery cell shell 20, the first portion 31 of the electrode terminal 30 is positioned inside the battery cell shell 20, and the third portion 33 of the electrode terminal 30 is positioned outside the battery cell shell 20.

In some embodiments, referring to FIG. 2, the battery cell shell 20 is formed by combining a plurality of portions, and the plurality of portions of the battery cell shell 20 are combined to form a shell body 21 for accommodating the electrode assembly 10. The shell body 21 includes a first side portion 211 and a second side portion 212 which are disposed opposite to each other in a first direction X, and further includes a third side portion 213 and a fourth side portion 214 which are disposed opposite to each other in a second direction Y, and a fifth side portion 215 and a sixth side portion 216 which are disposed opposite to each other in a third direction Z. The first direction X, the second direction Y and the third direction Z are perpendicular in pairs.

In some embodiments, referring to FIG. 2, at least one of the first side portion 211 and the second side portion 212 is provided with an encapsulation portion 22, and the encapsulation portion 22 extends outward from the shell body 21 in the first direction X. At least one of the third side portion 213, the fourth side portion 214, the fifth side portion 215, and the sixth side portion 216 is provided with a side sealing portion 23, and the encapsulation portion 22 and the side sealing portion 23 hermetically isolate the interior of the shell body 21 from the exterior of the shell body 21.

In some embodiments, the battery cell shell 20 may be made of a flexible aluminum-plastic film or be a rigid plastic shell.

Referring to FIG. 2 and FIG. 3a, the encapsulation portion 22 includes a first encapsulation area 221 and a second encapsulation area 222, the first encapsulation area 221 is an area where the electrode terminal 30 extends out of the battery cell shell 20, and the second encapsulation area 222 is an area where no electrode terminal 30 extends out. The first encapsulation area 221 is used for clamping the second portion 32, which can be understood as encapsulation portions 22 being provided on two opposite sides of the second portion 32. In the first direction X, an end portion of the first encapsulation area 221 facing away from the shell body 21 has a first distance D1 from the electrode assembly 10, and an end portion of the second encapsulation area 222 facing away from the shell body 21 has a second distance D2 from the electrode assembly 10, the first distance D1 being greater than the second distance D2.

Since the first distance D1 is greater than the second distance D2, the size of the side of the battery cell shell 20 provided with the encapsulation portion 22 is reduced, the side of the second encapsulation area 222 facing away from the shell body 21 can avoid other components, and the position where the encapsulation portion 22 originally needs to be provided can be available for other components, which is conducive to reducing the occupied space of the electrochemical apparatus 100, and then conducive to improving the energy density of the electrochemical apparatus 100.

In some embodiments, referring to FIG. 3a to FIG. 4, an insulating adhesive 30a is provided between the first encapsulation area 221 and the second portion 32, and the insulating adhesive 30a insulates the electrode terminal 30 from the encapsulation portion 22. The insulating adhesive 30a may be combined with the encapsulation portion 22 in a hot-pressing manner, which is conducive to reducing the gap between the electrode terminal 30 and the encapsulation portion 22 and improving the airtightness of the electrochemical apparatus 100.

In some embodiments, the insulating adhesive 30a may wrap the second portion 32 and part of the third portion 33, and may also wrap the second portion 32, part of the first portion 31, and part of the third portion 33.

In some embodiments, the side of the second encapsulation area 222 facing away from the shell body 21 may be used for avoiding electronic devices on a protective plate, or may be used for avoiding a camera module and a fingerprint module on an electrical device or some of the components on a motherboard, and the like.

In some embodiments, referring to FIG. 2, the encapsulation portion 22 is provided with an avoidance notch 223 in the first direction X, and the avoidance notch 223 is positioned on the side of the second encapsulation area 222 facing away from the shell body 21. Since the avoidance notch 223 is used for avoiding other components, other components can pass through the avoidance notch 223, thereby reducing the occupied space of the electrochemical apparatus 100.

In some embodiments, referring to FIG. 2 and FIG. 3a, the electrochemical apparatus 100 further includes an adapter structure 40, the adapter structure 40 connects the first portion 31 and the electrode assembly 10, a connecting portion 41 is provided between the adapter structure 40 and the first portion 31, and the connecting portion 41 is positioned between the first encapsulation area 221 and the electrode assembly 10. The adapter structure 40 is provided to facilitate the connection between the electrode terminal 30 and the electrode assembly 10. Since the adapter structure 40 is provided between the first encapsulation area 221 and the electrode assembly 10, the shell body reserves a space for accommodating the connecting portion 41, which facilitates the placement of the adapter structure 40. The manner in which the adapter structure 40 is provided in this embodiment is applicable to the case where the thickness of the electrochemical apparatus 100 in the third direction Z is greater than 2.5 mm, and in the case where the thickness of the electrochemical apparatus 100 in the third direction Z is greater than 2.5 mm, a space capable of accommodating the adapter structure 40 exists inside the shell body 21.

In some embodiments, referring to FIG. 3a and FIG. 3b, the adapter structure 40 includes a positive electrode adapter structure 40 and a negative electrode adapter structure 40. The positive electrode adapter structure 40 is connected to the positive electrode plate 12 and is also connected to the positive electrode terminal 30; and the negative electrode adapter structure is connected to the negative electrode plate, and is also connected to the negative electrode terminal 30.

In some embodiments, referring to FIG. 3a and FIG. 3b, each negative electrode plate 11 is connected to one adapter structure 40, and the plurality of adapter structures 40 connected to the negative electrode plates 11 are jointly connected to the positive electrode terminal 30 and form a connecting portion 41. Each positive electrode plate 12 is connected to one adapter structure 40, and the plurality of adapter structures 40 connected to the positive electrode plates 12 are jointly connected to the negative electrode terminal 30 and form the connecting portion 41.

In some embodiments, the plurality of adapter structures 40 may be connected to the first portion 31 of the electrode terminal 30 by means of welding connection to form the connecting portion 41, and the welding connection is conducive to improving the connection strength and facilitating processing. The welding connection may cause burrs or sharp portions to exist in the connecting portion 41, and by providing the adapter structure 40 between the first encapsulation area 221 and the electrode assembly 10, the shell body is made to reserve space for accommodating the connecting portion 41, which facilitates the placement of the connecting portion 41, and reduces the risk of the burrs or sharp portions of the connecting portion 41 puncturing the battery cell shell 20. In the embodiments in which the battery cell shell 20 is provided as an aluminum-plastic film, the risk that the connecting portion 41 punctures an outer layer of the aluminum-plastic film and comes into contact with a conductive metal on an inner layer of the aluminum-plastic film to cause a short-circuit can be reduced.

In other embodiments, the plurality of adapter structures 40 may be connected to the first portion 31 of the electrode terminal 30 by ultrasonic welding, bonding, hot pressing or the like to form the connecting portion 41.

In some embodiments, the adapter structure 40 may be a metal conductive plate inserted within the electrode assembly 10 and connected to the negative electrode plate 11 or the positive electrode plate 12, or may be obtained by directly cutting the negative electrode plate 11 or the positive electrode plate 12, which is not specifically limited herein.

In some embodiments, referring to FIG. 2 to FIG. 3b, the first side portion 211 of the shell body 21 in the first direction X is provided with a first wall 2111 and a second wall 2112 that are connected, the first wall 2111 is connected to the first encapsulation area 221, and the first wall 2111 is separated from the electrode assembly 10, so that a space for accommodating the adapter structure 40 is formed between the first wall 2111 and the electrode assembly 10, and the second wall 2112 is connected to the second encapsulation area 222.

In some embodiments, referring to FIG. 2, in the first direction X, a distance between the first wall 2111 and the electrode assembly 10 is a third distance D3, a distance between the second wall 2112 and the electrode assembly 10 is a fourth distance D4, and the third distance D3 is greater than the fourth distance D4. No electrode terminal 30 extends out of the second encapsulation area 222, and correspondingly, no adapter structure 40 is provided between the second wall 2112 and the electrode assembly 10 to facilitate the setting of the third distance D3 being greater than the fourth distance D4, thereby reducing the distance between the second wall 2112 and the electrode assembly 10 and causing part of the first side portion 211 to be recessed, which is conducive to reducing the overall size of the battery cell shell 20, and reducing the occupied space of the electrochemical apparatus 100.

In some embodiments, referring to FIG. 2, the third distance D3 is greater than the fourth distance D4, and in the first direction X, a width of the first encapsulation area 221 is 2.5 mm-3.5 mm, and a width of the second encapsulation area 222 is 2.5 mm-3.5 mm. On the basis of the fact that the third distance D3 is greater than the fourth distance D4, the width of the first encapsulation area 221 is set to be within the same range as the width of the second encapsulation area 222, so that the width of the second encapsulation area 222 in the first direction X is reduced, which is further conducive to reducing the overall size of the battery cell shell 20 and reducing the occupied space of the electrochemical apparatus 100.

Exemplarily, in the first direction X, the width of the first encapsulation area 221 and the width of the second encapsulation area 222 may specifically be 2.5 mm, 2.6 mm, 2.7 mm, 2.8 mm, 2.9 mm, 3.0 mm, 3.1 mm, 3.2 mm, 3.3 mm, 3.4 mm, 3.5 mm, or the like, which will not be enumerated herein.

In some embodiments, referring to FIG. 2, in the first direction X, the width of the first encapsulation area 221 is equal to the width of the second encapsulation area 222, which is conducive to improving the uniformity of the sealing strength of the encapsulation portion 22. Exemplarily, the widths of the first encapsulation area 221 and the second encapsulation area 222 in the first direction X are both 2.5 mm.

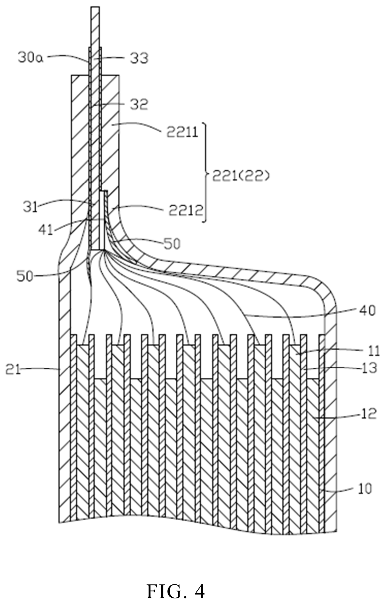

In other embodiments, referring to FIG. 4, the first encapsulation area 221 includes a sealing area 2211 and a fixing area 2212, and the sealing area 2211 is used for clamping the second portion 32, and is also used for hermetically isolating the interior of the shell body 21 from the exterior of the shell body 21. The fixing area 2212 is positioned between the sealing area 2211 and the electrode assembly 10, and the fixing area 2212 is used for clamping the connecting portion 41 formed by the adapter structure 40 and the first portion 31. Since the connecting portion 41 is clamped to the fixing area 2212, the limiting effect of the internal space of the shell body 21 on the adapter structure 40 in the third direction Z is reduced. The sealing area 2211 clamping the second portion 32 can be understood as encapsulation portions 22 being provided on two opposite sides of the second portion 32, and the fixing area 2212 clamping the connecting portion 41 can be understood as encapsulation portions 22 being provided on the two opposite sides of the connecting portion 41.

The manner in which the adapter structure 40 is provided in this embodiment is applicable to the case where the thickness of the electrochemical apparatus 100 in the third direction Z is less than or equal to 2.5 mm. In the case where the thickness of the electrochemical apparatus 100 in the third direction Z is less than or equal to 2.5 mm, the accommodating space inside the shell body 21 in the third direction Z is less than 2.5 mm, and by clamping the adapter structure 40 to the fixing area 2212, the limiting effect of the internal space of the shell body 21 for mounting the adapter structure 40 is reduced.

In some embodiments, referring to FIG. 4, a protective layer 50 is provided between the connecting portion 41 and the fixing area 2212 of the encapsulation portion 22, and the protective layer 50 may be an insulating tape or adhesive, which is not specifically limited herein. The protective layer 50 provides protection between the connecting portion 41 and the fixing area 2212 of the encapsulation portion 22, and reduces the risk that the connecting portion 41 pierces or punctures the fixing area 2212 of the encapsulation portion 22 to cause a short circuit.

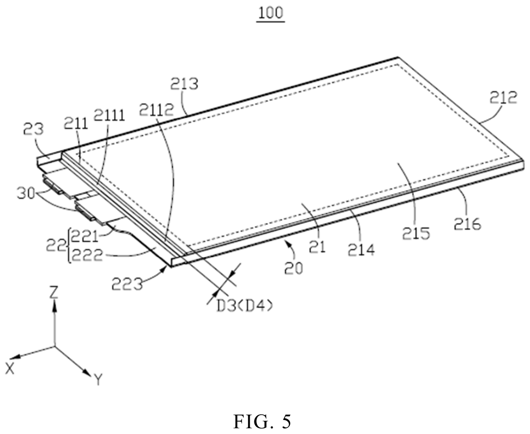

In some embodiments, referring to FIG. 4 and FIG. 5, there is no need to reserve a space between the first wall 2111 and the electrode assembly 10 or between the second wall 2112 and the electrode assembly 10 for mounting of the connecting portion 41. In the first direction X, the distance between the first wall 2111 and the electrode assembly 10 is a third distance D3, the distance between the second wall 2112 and the electrode assembly 10 is a fourth distance D4, and the third distance D3 is equal to the fourth distance D4, which is conducive to reducing the overall size of the battery cell shell 20 and reducing the occupied space of the electrochemical apparatus 100.

In some embodiments, referring to FIG. 5, the third distance D3 is equal to the fourth distance D4, and in the first direction X, a width of the first encapsulation area 221 is 4 mm-6 mm and a width of the second encapsulation area 222 is 2.5 mm-3.5 mm, so that the width of the second encapsulation area 222 in the first direction X is decreased, which is further conducive to reducing the overall size of the battery cell shell 20 and reducing the occupied space of the electrochemical apparatus 100.

Exemplarily, in the first direction X, the width of the first encapsulation area 221 may specifically be 4 mm, 4.5 mm, 5 mm, 5.5 mm or 6 mm, and the width of the second encapsulation area 222 may specifically be 2.5 mm, 2.6 mm, 2.7 mm, 2.8 mm, 2.9 mm, 3.0 mm, 3.1 mm, 3.2 mm, 3.3 mm, 3.4 mm, 3.5 mm, or the like, which will not be enumerated herein.

In some embodiments, referring to FIG. 2 and FIG. 5, in the second direction Y, the first encapsulation area 221 is positioned on one side of the second sealing area 222, so that the portions of the battery cell shell 20 for avoiding other components are disposed on one side of the electrode terminal 30 in the second direction Y, thereby allowing the portions of the battery cell shell 20 for avoiding other components to be centralized on one side, and facilitating the arrangement of other components.

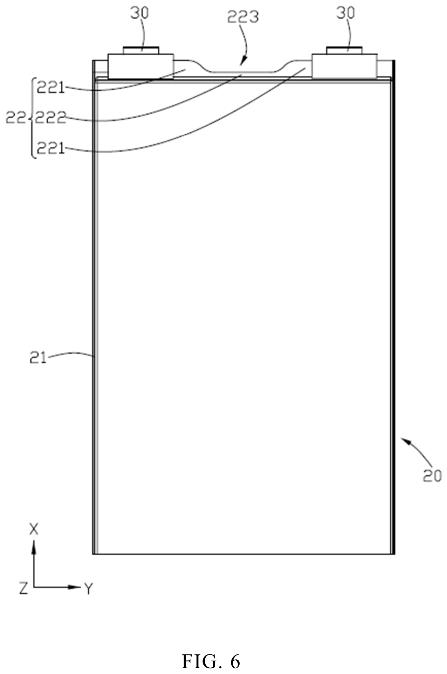

In some embodiments, referring to FIG. 6, two first encapsulation areas 221 are provided, and in the second direction Y, the second encapsulation area 222 is positioned between the two first encapsulation areas 221, so that the portions of the battery cell shell 20 for avoiding other components are disposed between the electrode terminals 30 on both sides, thereby allowing the portions of the battery cell shell 20 for avoiding other components to be centralized between the two first encapsulation areas 221, and facilitating the arrangement of other components.

In some embodiments, two second encapsulation areas 222 are provided, and in the second direction Y, the first encapsulation area 221 is positioned between the two second encapsulation areas 222.

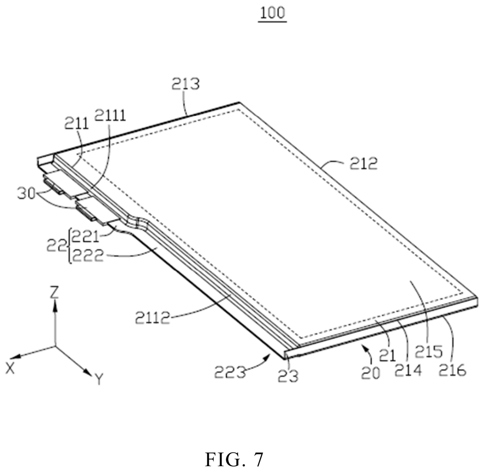

In some embodiments, referring to FIG. 7, the first encapsulation area 221 and the second encapsulation area 222 are arranged in the second direction Y. The shell body 21 has a first length in the first direction X, and a second length in the second direction Y. The first length is less than the second length. Since the second length is greater than the first length, the length of the encapsulation portion 22 in the second direction Y can be increased, which in turn facilitates an increase of the length of the second encapsulation portion 22 in the second direction Y, and increases the space of the battery cell shell 20 for avoiding other components. Thus, the overall size of the battery cell shell 20 is further decreased, and the occupied space of the electrochemical apparatus 100 is reduced.

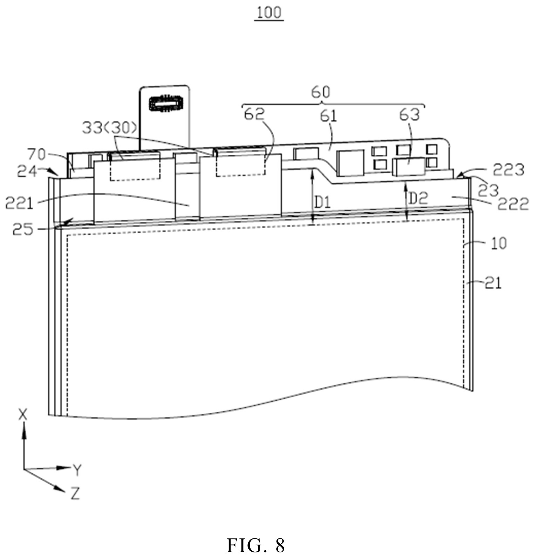

In some embodiments, referring to FIG. 8, the electrochemical apparatus 100 further includes a circuit board assembly 60, the circuit board assembly 60 includes a substrate 61, and a conductive member 62 and electronic components 63, which are disposed on the substrate 61, and the conductive member 62 is electrically connected to the third portion 33, so that the circuit board is electrically connected to the electrode terminal 30. In the first direction X, at least a few of the electronic components 63 are positioned on a side of the second encapsulation area 222 facing away from the shell body 21. The side of the second encapsulation area 222 facing away from the shell body 21 can be used for avoiding the higher electronic components 63 in the third direction Z, to reduce the influence of the height of the electronic components 63 on the overall thickness of the electrochemical apparatus 100 in the third direction Z, which is conducive to reducing the occupied space of the electrochemical apparatus 100.

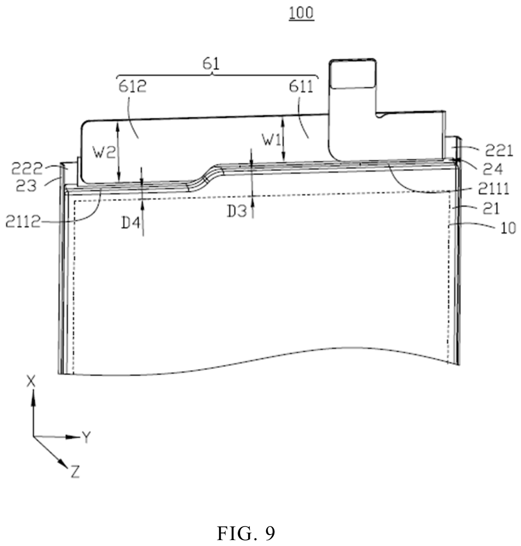

In some embodiments, referring to FIG. 9, the third distance D3 is greater than the fourth distance D4, the first encapsulation area 221 and the second encapsulation area 222 are arranged in the second direction Y, the substrate 61 includes a first plate body 611 and a second plate body 612, the first plate body 611 is positioned on a side of the first wall 2111 away from the electrode assembly 10, and the second plate body 612 is positioned on a side of the second wall 2112 away from the electrode assembly 10. In the first direction X, the first plate body 611 has a first width W1, and the second plate body 612 has a second width W2, the first width W1 being less than the second width W2. By setting the third distance D3 to be greater than the fourth distance D4, the distance between the second wall 2112 and the electrode assembly 10 is reduced, and part of the first side portion 211 is recessed, so that the space, for accommodating the substrate 61, of the side of the second wall 2112 facing away from the shell body 21 is increased, which facilitates the increase of the width of the second plate body 612. By increasing the width of the second plate body 612, the arrangement and setting of the electronic components 63 are facilitated.

In some embodiments, referring to FIG. 8 and 9, the first encapsulation area 221 and the second encapsulation area 222 are arranged in the second direction Y, a first accommodating space 24 is disposed on sides of the first encapsulation area 221 and the second encapsulation area 222 in the third direction Z, the first direction X, the second direction Y and the third direction Z are perpendicular in pairs, and at least part of the substrate 61 is positioned in the first accommodating space 24. By providing the first accommodating space 24 to accommodate the substrate 61, the structural compactness of the electrochemical apparatus 100 can be improved, and the thickness of the electrochemical apparatus 100 in the third direction Z is reduced, which is in turn conducive to reducing the occupied space of the electrochemical apparatus 100.

In some embodiments, referring to FIG. 8 and FIG. 9, the first accommodating space 24 is defined by the first encapsulation area 221, the second encapsulation area 222, the first wall 2111, the second wall 2112, the side sealing portion 23 of the third side portion 213, and the side sealing portion 23 of the fourth side portion 214.

In some embodiments, referring to FIG. 8 and FIG. 9, at least part of the conductive member 62 is positioned in the first accommodating space 24, and at least part of the third portion 33 extends into the first accommodating space 24 and is connected to the conductive member 62, which further improves the structural compactness of the electrochemical apparatus 100.

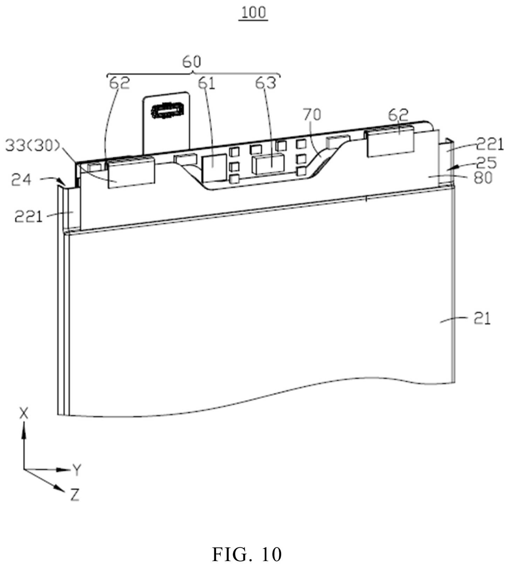

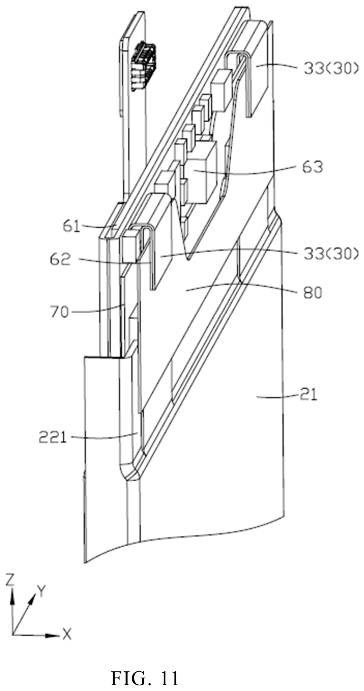

In some embodiments, referring to FIG. 10 and FIG. 11, in the third direction Z, a second accommodating space 25 is disposed on sides of the first encapsulation area 221 and the second encapsulation area 222 facing away from the first accommodating space 24, at least part of the conductive member 62 is positioned in the second accommodating space 25, and at least part of the third portion 33 extends into the second accommodating space 25 and is connected to the conductive member 62. In this way, the connecting structure of the electrode terminal 30 and the circuit board assembly 60 is also placed in the second accommodating space 25, which further optimizes the structural arrangement and improves the structural compactness of the electrochemical apparatus 100.

In some embodiments, referring to FIG. 8 to FIG. 10, the second accommodating space 25 is defined by the first encapsulation area 221, the second encapsulation area 222, the first wall 2111, and the second wall 2112. The first accommodating space 24 is positioned on one side of the encapsulation portion 22 in the third direction, and the second accommodating space 25 is positioned on the other side of the encapsulation portion 22 in the third direction Z.

In some embodiments, referring to FIG. 8 to FIG. 10, the depth of the first accommodating space 24 in the third direction Z is greater than the depth of the second accommodating space 25 in the third direction Z, and the deeper first accommodating space 24 accommodates the circuit board assembly 60, which is conducive to improving the structural compactness of the electrochemical apparatus.

In some embodiments, the conductive member 62 may be provided as a metal sheet available for conducting electricity, such as an aluminum sheet or a nickel sheet, and the conductive member 62 may be welded to the substrate 61.

In some embodiments, referring to FIG. 10, the electrochemical apparatus 100 further includes a first insulating member 70 and a second insulating member 80, the first insulating member 70 connects the circuit board assembly 60 to at least one of the first encapsulation area 221 and the second encapsulation area 222, and the second insulating member 80 connects the third portion 33 to the first encapsulation area 221. The first insulating member 70 and the second insulating member 80 have insulating and bonding effects, and are capable of fixing the circuit board assembly 60 to at least one of the first encapsulation area 221 and the second encapsulation area 222, and fixing the third portion 33 to the first encapsulation area 221, so as to reduce the risks of deformation of the third portion 33 under stress and disconnection of the third portion from the conductive member 62 under stress.

In some embodiments, referring to FIG. 8 to FIG. 11, the first insulating member 70 is disposed between the electronic components 63 and the first encapsulation area 221 and/or the second encapsulation area 222 to insulate the electronic components 63 from the encapsulation portion 22, which is conducive to protecting the electronic components 63 and the encapsulation portion 22.

In some embodiments, referring to FIG. 8 to FIG. 10, the second insulating member 80 is disposed between the third portion 33 and the first encapsulation area 221 to insulate the third portion 33 from the encapsulation portion 22, which is conducive to protecting the third portion 33 and the encapsulation portion 22.

In some embodiments, the first insulating member 70 and the second insulating member 80 may be made of insulating green tape or DuPont paper.

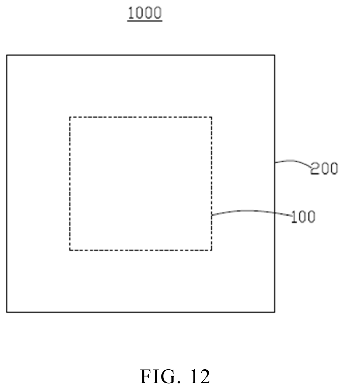

Referring to FIG. 12, the embodiments in this application further provide an electrical device 1000. The electrical device 1000 includes a device body 200 and the electrochemical apparatus 100 in any one of the above embodiments. Since the device body 200 adopts the technical solution of any one of the above embodiments of the electrochemical apparatus 100, the device body has at least the beneficial effects brought about by the technical solution of any one of the above embodiments of the electrochemical apparatus 100, which will not be repeated herein.

The electrical device 1000 may be a laptop computer, a tablet computer, a cell phone, an electronic bracelet, an electronic reader, an electronic learning machine, a video player, and the like.

In addition, a person of ordinary skill in the technical field should understand that the foregoing embodiments are merely intended to illustrate this application rather than to limit this application. Appropriate changes and variations on the foregoing embodiments shall fall within the scope of the disclosure of this application as long as they are within the essence, spirit and scope of this application.

## Claims

1. An electrochemical apparatus, **characterized by** comprising:
an electrode assembly; and
a battery cell shell, comprising a shell body for accommodating the electrode assembly and an encapsulation portion extending outward from the shell body in a first direction, wherein the encapsulation portion comprises a first encapsulation area and a second encapsulation area ; in the first direction, an end portion of the first encapsulation area facing away from the shell body has a first distance from the electrode assembly, and an end portion of the second encapsulation area facing away from the shell body has a second distance from the electrode assembly, the first distance being greater than the second distance; and
an electrode terminal, comprising a first portion, a second portion, and a third portion connected in sequence, wherein the first portion is electrically connected to the electrode assembly, the second portion is clamped to the first encapsulation area, and the third portion is exposed out of the battery cell shell.

2. The electrochemical apparatus according to claim 1, **characterized in that** the electrochemical apparatus comprises an adapter structure, the adapter structure connects the first portion with the electrode assembly, a connecting portion is provided between the adapter structure and the first portion, and the connecting portion is positioned between the first encapsulation area and the electrode assembly.

3. The electrochemical apparatus according to claim 2, **characterized in that** in the first direction, a width of the first encapsulation area is 2.5 mm-3.5 mm, and a width of the second encapsulation area is 2.5 mm-3.5 mm.

4. The electrochemical apparatus according to claim 1, **characterized in that** the electrochemical apparatus comprises an adapter structure, the adapter structure connects the first portion with the electrode assembly, and a connecting portion is provided between the adapter structure and the first portion; and
the first encapsulation area comprises a sealing area and a fixing area, the sealing area is used for clamping the second portion, the fixing area is positioned between the sealing area and the electrode assembly, and the fixing area is used for clamping the connecting portion.

5. The electrochemical apparatus according to claim 4, **characterized in that** in the first direction, a width of the first encapsulation area is 4 mm-6 mm, and a width of the second encapsulation area is 2.5 mm-3.5 mm.

6. The electrochemical apparatus according to claim 1, **characterized in that** in a second direction, the first encapsulation area is positioned on one side of the second encapsulation area, and the second direction is perpendicular to the first direction.

7. The electrochemical apparatus according to claim 1, **characterized in that** the encapsulation portion further comprises another first encapsulation areas, the second encapsulation area is positioned between the first encapsulation area and the other first encapsulation area in the second direction, and the second direction is perpendicular to the first direction.

8. The electrochemical apparatus according to claim 1, **characterized in that** the first encapsulation area and the second encapsulation area are arranged in the second direction, and the second direction is perpendicular to the first direction; and
the shell body has a first length in the first direction and a second length in the second direction, and the first length is less than the second length.

9. The electrochemical apparatus according to claim 1, **characterized in that** in the first direction, the encapsulation portion is provided with an avoidance notch, and the avoidance notch is positioned on a side of the second encapsulation area facing away from the shell body.

10. The electrochemical apparatus according to claim 1, **characterized in that** the electrochemical apparatus comprises a circuit board assembly, the circuit board assembly comprises a substrate, a conductive member and electronic components; the conductive member and the electronic components are disposed on the substrate, the conductive member is electrically connected to the third portion, and in the first direction, at least one of the electronic components is positioned on a side of the second encapsulation area facing away from the shell body.

11. The electrochemical apparatus according to claim 10, **characterized in that** an end portion of the shell body in the first direction is provided with a first wall and a second wall connected to each other, the first wall is connected to the first encapsulation area, the second wall is connected to the second encapsulation area, and in the first direction, a distance between the first wall and the electrode assembly is a third distance, a distance between the second wall and the electrode assembly is a fourth distance, and the third distance is greater than or equal to the fourth distance.

12. The electrochemical apparatus according to claim 11, **characterized in that** the third distance is greater than the fourth distance, the first encapsulation area and the second encapsulation area are arranged in the second direction, the substrate comprises a first plate body and a second plate body, the first plate body is positioned on a side of the first wall away from the electrode assembly, the second plate body is positioned on a side of the second wall away from the electrode assembly, and the first direction is perpendicular to the second direction; and
in the first direction, the first plate body has a first width, the second plate body has a second width, and the first width is less than the second width.

13. The electrochemical apparatus according to claim 10, **characterized in that** the first encapsulation area and the second encapsulation area are arranged in the second direction, a first accommodating space is disposed on sides of the first encapsulation area and the second encapsulation area in a third direction, the first direction, the second direction and the third direction are perpendicular to each other, and at least part of the substrate is positioned in the first accommodating space.

14. The electrochemical apparatus according to claim 13, **characterized in that** the conductive member is positioned in the first accommodating space, and at least part of the third portion extends into the first accommodating space and is connected to the conductive member.

15. The electrochemical apparatus according to claim 13, **characterized in that** in the third direction, a second accommodating space is disposed on sides of the first encapsulation area and the second encapsulation area facing away from the first accommodating space, at least part of the conductive member is positioned in the second accommodating space, and at least part of the third portion extends into the second accommodating space and is connected to the conductive member.

16. The electrochemical apparatus according to claim 10, **characterized in that** the electrochemical apparatus comprises a first insulating member and a second insulating member, the first insulating member connects the circuit board assembly to the first encapsulation area and/or the second encapsulation area, and the second insulating member connects the third portion to the first encapsulation area.

17. An electrical device, **characterized by** comprising a device body and the electrochemical apparatus according to any one of claims 1 to 16, the electrochemical apparatus being mounted in the device body.
